# EUROPÄISCHE PATENTSCHRIFT

(11) **EP 3 248 033 B1**
(45) Veröffentlichungstag und Bekanntmachung des Hinweises auf die Patenterteilung: **24.08.2022**
(21) Anmeldenummer: 16706515.0
(22) Anmeldetag: 05.01.2016
(51) Int. Cl.: G02B 6/44

(54) **VERFAHREN ZUR FERTIGUNG EINES UNTERWASSERKABELS, SCHLEPPKABEL, SCHLEPPSONAR UND WASSERFAHRZEUG**
METHOD FOR MANUFACTURING AN UNDERWATER CABLE, AND A TOWED CABLE, TOWED SONAR, AND WATER VEHICLE
PROCÉDÉ DE FABRICATION D'UN CÂBLE SUBAQUATIQUE, CÂBLE REMORQUÉ, SONAR REMORQUÉ ET D'UN VÉHICULE AQUATIQUE

(30) Priorität: 20.01.2015 DE 102015100735
(43) Veröffentlichungstag der Anmeldung: 29.11.2017
(73) Patentinhaber: ATLAS ELEKTRONIK GmbH, 28309 Bremen (DE)
(72) Erfinder: HOFFMANN, Christoph, 27777 Ganderkesee (DE); HETEBRÜG, Martin, 28844 Weyhe (DE)
(74) Vertreter: thyssenkrupp Intellectual Property GmbH
(86) Internationale Anmeldenummer: PCT/DE2016/100001
(87) Internationale Veröffentlichungsnummer: WO 2016/116094

(56) Entgegenhaltungen:
- EP-A2- 0 193 779
- EP-A2- 0 246 543
- DE-A1- 3 243 298
- DE-A1-102011 057 091
- US-A1- 2010 039 890

## Beschreibung

Die Erfindung betrifft ein Verfahren zur Fertigung eines Unterwasserkabels, insbesondere eines Schleppkabels für eine Schleppantenne eines Wasserfahrzeuges, wobei das Unterwasserkabel einen Kabelkern und einen Außenmantel aufweist. Des Weiteren betrifft die Erfindung ein Schleppkabel, ein Schlepp-Sonar und ein Wasserfahrzeug.

Unterwasserkabel werden zur Kommunikation und Energieversorgung für verschiedenste Anwendungen unter Wasser eingesetzt. Dabei ist das Unterwasserkabel dem hydrostatischen Druck, der Wellenbewegung und je nach Anwendung weiteren Belastungen wie Zugbelastungen ausgesetzt.

Unterwasserkabel werden insbesondere als Schleppkabel für eine Schleppantenne eines Wasserfahrzeuges verwendet. Das Schleppkabel und die Schleppantenne sind beispielsweise aufgerollt in einer Trommel an Bord gelagert. Beim Einsatz wird die lange Linienantenne an dem Schleppkabel hinter dem Schiff hergeschleppt. Dadurch ist die Schleppantenne von Geräuschen des Schiffes, insbesondere des Schiffantriebs, entfernt, sodass akustische Störungen an der Schleppantenne vermindert werden.

Auf der Schleppantenne sind mehrere Hydrophone in bestimmten Abständen angebracht. Schleppantennen können eine Länge von beispielsweise 1500m aufweisen. Beim Schleppen muss das Wasserfahrzeug eine Mindestgeschwindigkeit einhalten, um die Schleppantenne in einer horizontalen Ebene zu halten. Die Schleppantenne kann üblicherweise gezielt in verschiedenen Tiefen eingesetzt werden.

Die Hydrophone der Schleppantenne detektieren Geräuschquellen im Wasser, insbesondere kann durch eine Datenverarbeitung aber nicht nur die Entfernung und die Richtung einer Geräuschquelle, sondern auch der aussendende Schiffstyp durch charakteristische akustische Muster seiner Maschinengeräusche identifiziert werden. Dies ist üblicherweise nur möglich, wenn das Schleppkabel in einer geraden Linie ausgerichtet ist.

Unterwasserkabel werden bei Einsatz unter Wasser durch den hydrostatischen Wasserdruck komprimiert, sodass das Volumen eines Kabels abnimmt und die Dichte erhöht wird. Wenn das Kabel anschließend an die Wasseroberfläche gebracht wird, ist diese Kompression nicht reversibel, das bedeutet es tritt immer ein Dichteunterschied zwischen einem gefertigten und einem einmal verwendeten Unterwasserkabel auf. Folglich tritt bei einem idealerweise auftriebsneutral gefertigten Schleppkabel nach der ersten Verwendung unter Wasser ein Abtriebsverhalten auf.

Durch diese Dichteveränderung ist die für die Ortung und Detektion notwendige Bedingung der geraden und ebenen Ausrichtung der Schleppantenne nicht immer gegeben. Dadurch wird die Ortung und Detektion von Geräuschquellen im Wasser erschwert.

Durch die Kompression eines Schleppkabels unter Wasser wird das Auftriebsverhalten des Schleppkabels verändert, wobei diese Veränderung nicht immer gleichmäßig über die gesamte Länge des Schleppkabels erfolgt. Das geänderte Auftriebsverhalten kann zwar teilweise durch Trimmgewichte und/oder hydrodynamische Flügel am Schleppkabel ausgeglichen werden, jedoch wirkt dieser Ausgleich immer nur lokal an bestimmten Stellen des Schleppkabels.

Dadurch lässt sich auch durch diese Maßnahme nicht vermeiden, dass durch die Dichteänderung und das geänderte Auftriebsverhalten das Schleppkabel anfängt im Wasser zu schwingen und diese Schwingungen sich auf die Schleppantenne übertragen

Dadurch, dass durch die Kompression unter Wasser das Volumen des Schleppkabels verringert wird und seine Dichte (als Quotient aus Masse und Volumen) ansteigt, steigt die Gefahr, dass das Schleppkabel nach unten abknickt, ein stärkerer vertikaler Widerstand im Wasser auftritt und die Verbindung zum Wasserfahrzeug gegebenenfalls abreißt. Zudem kann dadurch die Schleppantenne zu nah an den Meeresgrund oder andere Objekte wie Offshore-Strukturen im Meer gelangen und gegebenenfalls beschädigt werden.

Für Unterwasserkabel nach dem Stand der Technik sind Dichteänderungen von bis zu 20% durch die Kompression unter Wasser bekannt.

DE 32 43 298 A1 und EP 0 246 543 A2 zeigen jeweils Unterwassertelekommunikationskabel, bei denen der Kabelkern unter Druck in den Mantel gepresst ist. US 2010/039890 A1 offenbart ein Kabel und seismische Sensoren, die entlang des Kabels angeordnet sind.

Aufgabe der Erfindung ist es, den Stand der Technik zu verbessern.

Gelöst wird die Aufgabe durch ein Verfahren zur Fertigung eines Unterwasserkabels, insbesondere eines Schleppkabels für eine Schleppantenne eines Wasserfahrzeuges, wobei das Unterwasserkabel einen Kabelkern und einen Außenmantel aufweist, wobei mindestens der Kabelkern unter einem Druck, welcher vom Umgebungsdruck abweicht, gefertigt wird, sodass der Kabelkern luftblasenarm hergestellt wird und das Unterwasserkabel, welches auf eine Verbringtiefe unter Wasser und anschließend wieder an die Oberfläche des Wassers gebracht wurde, maximal eine Dichteänderung von ±5,0%, insbesondere ±3,0% oder ±1,5% aufweist.

Durch dieses Fertigungsverfahren wird die Dichteänderung zwischen dem gefertigten Kabel und nach dem ersten Einsatz unter Wasser vermindert. Zudem wird ein Unterwasserkabel bereitgestellt, welches auch nach Einsatz unter Wasser sein durch das Fertigungsverfahren eingestelltes Auftriebsverhalten weitgehend behält.

Somit kann ein derart gefertigtes Unterwasserkabel als Schleppkabel für eine Schleppantenne sicherstellen, dass die Schleppantenne gradlinig und in ebener Ebene eingesetzt werden kann, um eine optimale Detektion und Identifikation von unbekannten Geräuschquellen im Wasser zu ermöglichen.

Des Weiteren wird durch die geringe Dichteänderung des Unterwasserkabels zwischen Fertigung und dem ersten Einsatz unter Wasser und insbesondere durch die homogene Fertigung des Unterwasserseekabels und damit der homogenen, fertigungsbedingten Dichteveränderung sichergestellt, dass bei Verwendung als Schleppkabel kein Schwingen der Schleppantenne und damit eine Störung des Sonars auftritt.

Somit sind keine auftriebskorrigierenden Maßnahmen wie Trimmgewichte oder hydrodynamische Flügel zur Tiefeneinstellung nach dem ersten Einsatz eines Unterwasserkabels im Wasser notwendig.

Ein wesentlicher Gedanke der Erfindung beruht darauf, dass mindestens der Kabelkern des Unterwasserkabels luftblasenarm herzustellen ist, da sich gezeigt hat, dass insbesondere die Kompression der Luftblasen in Unterwasserkabeln nach dem Stand der Technik beim Einsatz unter Wasser zur Kompression eines Unterwasserkabels und damit zur relevanten Dichteänderung des Unterwasserkabels führt.

Erfahrungsgemäß sind Luftblasen in einem Kabelkern inhomogen verteilt. Durch dieses Fertigungsverfahren mit einer luftblasenarmen Fertigung des Kabelkerns wird erreicht, dass eine homogene Dichte über die Länge des Schleppkabels eingestellt wird. Somit wird ein Schwingen des Schleppkabels weiter vermieden.

Durch die sehr geringe Dichteänderung des Kabels bei erfindungsgemäßer Fertigung und dem erstem Einsatz unter Wasser, kann die geringe Dichteänderung von vornherein beim Einsatz der Schleppantenne zur Ortung und Identifizierung berücksichtigt werden, sodass die Einsatztiefe einfacher eingestellt werden kann.

Folgendes Begriffliche sei erläutert:
Unter einem "Unterwasserkabel" wird insbesondere ein Kabel verstanden, welches im Wasser zur Kommunikationsübertragung und/oder Übertragung von elektrischer Spannung eingesetzt wird. Das Unterwasserkabel kann insbesondere frei im Wasser schwimmen und/oder gezielt im Wasser und/oder Wasserboden verlegt sein und/oder von einem Wasserfahrzeug geschleppt werden. Das Unterwasserkabel ist insbesondere vor dem Eindringen von Meerwasser zur Vermeidung von Korrosion geschützt.

Bei einem "Schleppkabel" kann es sich insbesondere um eine Verbindung zwischen zwei zueinander beweglichen Maschinenteilen, beispielsweise zwischen zwei Schiffen, und/oder um ein Kabel handeln, an welchem insbesondere unbewegliche und/oder bewegliche Gegenstände auf und/oder unter Wasser geschleppt werden. Insbesondere ist ein Schleppkabel ein Schleppkabel einer Schleppantenne, welches mit einem Unter- und/oder Überwasserfahrzeuges verbunden ist und an dem Hydrophone als Schleppantenne hinter dem Wasserfahrzeug hergeschleppt werden. Hierbei kann das Schleppkabel, welches am Wasserfahrzeug befestig ist, nur den ersten Bereich hinter dem Wasserfahrzeug einnehmen und nachfolgend die Schleppantenne am Schleppkabel befestigt sein oder das Schleppkabel nimmt die gesamte Schlepplänge ein, wobei hinter dem Wasserfahrzeug zunächst das alleinige Schleppkabel folgt und in einem bestimmten Abstand vom Wasserfahrzeug, bei dem akzeptable Störungen durch die Geräusche des Wasserfahrzeuges mehr auftreten, kann auf der weiteren Länge des Schleppkabels die Schleppantenne befestigt sein.

Der "Kabelkern" umfasst insbesondere den Innenleiter eines Unterwasserkabels, welcher die einzelnen Leiter zur Kommunikation und/oder elektrischen Versorgung enthält. Hierbei kann es sich beispielsweise um einzelne Drähte aus Kupfer oder versilbertem Kupfer mit einem Durchmesser von 1/10mm bis in den Millimeterbereich und/oder Glasfasern handeln. Zur Flexibilität kann der Kabelkern insbesondere auch ein enges Geflecht aus feinsten Drähten und/oder Naturfasern aufweisen.

Bei dem "Außenmantel" eines Unterwasserkabels handelt es sich insbesondere um eine Ummantelung des Kabelkerns mit Isolierstoffen. Für die Isolierstoffe des Außenmantels werden insbesondere unterschiedliche Kunststoffe eingesetzt, welche den Kabelkern elektrisch isolieren und/oder vor äußeren Belastungen schützen. Insbesondere ist der Außenmantel eines Unterwasserkabels meerwasserbeständig und verhindert das Eindringen von Meerwasser in den Kabelkern. Des Weiteren kann der Außenmantel oder auch der Kabelkern eine Abschirmung enthalten. Als Außenmantel kommen insbesondere Kunststoffe wie PVC, Polyurethan, Polyether und andere zum Einsatz. Auch kann der Außenmantel eines Unterwasserkabels insbesondere mit Armierungen (Stahldrahtgeflecht, Stahlblech) als Schutz und zur Erhöhung der mechanischen Stabilität und/oder Flexibilität versehen sein.

Der "Druck" ist insbesondere ein Maß für den Widerstand, den Materie einer Verkleinerung des zur Verfügung stehenden Raums entgegensetzt.

Der "Umgebungsdruck" ist insbesondere der hydrostatische Druck der Luft, welcher an einem bestimmen Ort herrscht. Der Umgebungsdruck wird insbesondere als Bezugsgröße für den relativen Druck als relative Druckbeziehung zwischen zwei Volumina verwendet.

Die "Verbringtiefe" ist insbesondere die Tiefe unter der gemittelten Wasseroberfläche in der vertikalen Wassersäule, auf welche ein Unterwasserkabel gebracht wird.

Die "Dichteänderung" ist insbesondere die Änderung der Dichte als Quotient aus der Masse eines Körpers und seinem Volumen.

In einer weiteren Umsetzung des Verfahrens wird der Kabelkern unter einem Unterdruck und/oder einem Überdruck gegenüber dem Umgebungsdruck gefertigt.

Somit kann ein luftblasenarmer Kabelkern hergestellt werden, in dem sich insbesondere im Kabelkern befindliche Luftblasen gezielt durch Anlegen eines Unterdrucks während der Fertigung abgesaugt und/oder durch Anlegen eines Überdrucks aus dem Kabelkern herausgedrückt werden.

Zudem erfolgt durch Unter- und/oder Überdruck eine Kompression des Kabelkerns bereits während der Fertigung, sodass die Dichteänderung im Wesentlichen bereits vor dem ersten Einsatz des Unterwasserkabels im Wasser erfolgt ist und beim Unterwassereinsatz keine weitere oder nur sehr geringe Kompression und somit Dichteänderung auftritt.

Vorteilhaft wird hier ein vom Umgebungsdruck abweichender Druck angewandt, welcher betragsmäßig mindestens dem Druck in der späteren Verbringtiefe unter Wasser entspricht.

Als "Unterdruck" wird insbesondere der Zustand des niedrigeren Drucks in einem bestimmten Volumen bezeichnet. Ein Unterdruck liegt insbesondere dann vor, wenn der Druck innerhalb des Volumens kleiner ist als der Umgebungsdruck. Ein Unterdruck kann insbesondere dadurch erzielt werden, dass die Fertigung eines Unterwasserkabels in einer Unterdruckkammer erfolgt, bei welcher der zugeführte Gasvolumenstrom niedriger ist als der abgeführte Gasvolumenstrom.

Unter "Überdruck" wird insbesondere der Zustand des höheren Drucks in einem bestimmten Volumen verstanden. Ein Überdruck liegt insbesondere vor, wenn der Druck innerhalb des Volumens größer ist als der Umgebungsdruck. Die Fertigung unter Überdruck kann insbesondere dadurch erfolgen, dass diese in einer Überdruckkammer erfolgt, wobei es sich insbesondere um einen Raum handelt, bei dem zum gleichen Zeitpunkt ein größerer Gasvolumenstrom in diesen Raum eingebracht als abgeführt wird.

Um die Entfernung von Luftblasen aus dem Kabelkern weiter zu verbessern, wird der Kabelkern unter Verwendung eines flüchtigen Schutzgases, insbesondere Helium, gefertigt, wobei der Kabelkern mit dem flüchtigen Schutzgas begast und gleichzeitig und/oder anschließend unter einem vom Umgebungsdruck abweichenden Druck gefertigt wird, wobei das flüchtige Schutzgas zumindest teilweise aus dem Kabelkern ausgast.

Durch die Verwendung eines flüchtigen Schutzgases in der Fertigung wird die Luft aus dem Kabelkern verdrängt, sodass ein weitgehend luftblasenarmer Kabelkern hergestellt werden kann.

Hierbei kann der Kabelkern gleichzeitig mit einem flüchtigen Schutzgas beaufschlagt und unter einem vom Umgebungsdruck abweichenden Druck gefertigt werden. Dies ist insbesondere vorteilhaft bei einer Fertigung in einer Überdruckkammer, da mit dem hohen zugeführten Gasvolumenstrom auch das Schutzgas zugeführt werden kann. Wird ein so gefertigter Kabelkern anschließend wieder unter Umgebungsdruck gebracht, so kann das flüchtige Schutzgas ausgasen. Hierzu ist es insbesondere vorteilhaft ein flüchtiges Schutzgas wie Helium zu verwenden, welches eine sehr hohe Diffusionsrate aufweist und schnell von sich aus ausgast.

Der Kabelkern kann aber auch erst begast werden und anschließend unter einem vom Umgebungsdruck abweichenden Druck gefertigt werden. Hier kann ebenso vorteilhaft eine Kombination von Überdruck zur Begasung mit dem Schutzgas und anschließenden Unterdruck zum Absaugen des Schutzgases eingesetzt werden.

Auch ist es vorteilhaft, dass nach der Verflüchtigung und/oder Entfernung des Schutzgases der Kabelkern einem abschließenden Überdruck aufgesetzt wird, so dass eine vollständige Kompression des Kabelkerns erfolgt, insbesondere eine Kompression an den Orten, an denen das Schutzgas zuvor vorhanden war.

Unter "Schutzgas" wird insbesondere ein Gas oder ein Gasgemisch bezeichnet, welches die Aufgabe hat, die Luft zu verdrängen. Insbesondere verbessert die Verwendung eines Schutzgases die luftblasenfreie Fertigung des Kabelkerns. Als Schutzgas kann beispielsweise Stickstoff aber bevorzugt Helium eingesetzt werden, da Helium leicht flüchtig ist. Als "leichtflüchtig" wird hier insbesondere eine Verdunstungszahl kleiner 10 verstanden, wobei die Verdunstungszahl als Verhältnis des Dampfdrucks des betrachteten Stoffes zum Dampfdruck des leichtflüchtigen Bezugsstoffes Diethylether (bei 20° und 65±5%relativer Luftfeuchtigkeit) definiert ist.

Erfindungsgemäß wird ein Auftrieb des Unterwasserkabels über eine Dichte einer ersten Mantelschicht des Außenmantels eingestellt, wobei die erste Mantelschicht um den gefertigten Kabelkern angeordnet wird und eine geringere Dichte als das Wasser aufweist.

Somit kann der Auftrieb des Unterwasserkabels gezielt über die Dichte einer ersten Mantelschicht des Außenmantels eingestellt werden, sodass beispielsweise ein auftriebsneutrales Unterwasserkabel gefertigt wird, ohne dass eine spätere Dichteänderung des Kabelkerns beim Einsatz unter Wasser das Auftriebsverhalten stört.

Des Weiteren kann je nach Kompression während der Fertigung und somit nach Ausmaß der Dichteänderung des Kabelkerns während der Fertigung anschließend die gezielte Wahl der Dichte der ersten Mantelschicht dazu verwendet werden, ein gezieltes Auftriebsverhalten des Unterwasserkabels einzustellen.

Unter einer "Mantelschicht" wird insbesondere eine Materialschicht des Außenmantels des Unterwasserkabels verstanden, wobei diese Mantelschicht insbesondere vollständig den gefertigten Kabelkern umgibt.

Um die Parameter des Unterwasserkabels weiter einzustellen, wird eine Dichte des Unterwasserkabels durch die erste Mantelschicht und eine zweite Mantelschicht des Außenmantels eingestellt, wobei die erste Mantelschicht und die zweite Mantelschicht derart zusammengesetzt werden, dass ein Durchmesser des Unterwasserkabels festgelegt wird.

Zur Durchmessereinstellung des Unterwasserkabels weist bevorzugt die zweite Mantelschicht eine andere Dichte als die Dichte der ersten Mantelschicht auf, sodass unterschiedliche Materialstärken der Mantelschichten vorliegen, welche den Durchmesser des Unterwasserkabels festlegen.

Durch die unterschiedlichen Dichten der ersten und der zweiten Mantelschicht und deren unterschiedlichen Materialstärken ist eine Fertigung von unterschiedlichen Durchmessern des Unterwasserkabels mit unterschiedlichen Auftriebsverhalten möglich.

Die zweite "Mantelschicht" entspricht insbesondere der oben definierten Mantelschicht, weist jedoch andere Dichteeigenschaften auf.

Um Luftblasen in den Mantelschichten und/oder Zwischenschichten zu vermeiden, wird oder werden die erste Mantelschicht und/oder die zweite Mantelschicht unter einem Unterdruck und/oder einem Überdruck gegenüber dem Umgebungsdruck gefertigt und/oder um den Kabelkern angeordnet.

Somit wird verhindert, dass bei der Fertigung der ersten und/oder der zweiten Mantelschicht Luft in den Mantelschichten eindringen und/oder verbleiben kann und/oder bei der Anordnung der beiden Mantelschichten um den Kabelkern Luft eingeschlossen werden kann.

Folglich kann ein besonders luftblasenarmes Unterwasserkabel bereitgestellt werden, bei dem eine erneute Kompression unter Wasser keine oder nur sehr geringfügige Dichteänderung hervorruft.

Somit bleibt das während der Fertigung eingestellte Auftriebsverhalten des Unterwasserkabels auch bei Einsatz im Wasser bestehen.

In einem weiteren Aspekt der Erfindung wird die Aufgabe gelöst durch ein Schleppkabel, welches nach einem zuvor beschriebenen Verfahren gefertigt ist.

Um die Kommunikation und/oder Spannungsversorgung über das Unterwasserkabel zu ermöglichen, weist der Kabelkern zur Kommunikation und/oder Spannungsversorgung Glasfaser und/oder Kupferadern und/oder Aluminium und/oder zum Schutz Textilfasern und/oder Metallgeflecht und/oder Aramide und/oder Polycarbonat und/oder Polyethylen und/oder Polyurethan auf.

Durch diese Ausgestaltung des Kabelkerns können zum einen datentransferierende und energietransferierende Signale ausgetauscht werden, zum anderen ist der Kabelkern sowohl innerhalb des Kerns als auch durch den Außenmantel geschützt.

In einem zusätzlichen Aspekt der Erfindung wird die Aufgabe gelöst durch ein Schleppkabel für eine Schleppantenne, wobei das Schleppkabel einen Kern und eine Umhüllung des Kerns aufweist, wobei der Kern zur Kommunikation und/oder Spannungsversorgung Glasfaser und/oder Kupferadern und/oder Aluminium und/oder zum Schutz Textilfasern und/oder Metallgeflecht und/oder Aramide und/oder Polycarbonat und/oder Polyethylen und/oder Polyurethan aufweist, wobei das Schleppkabel, nachdem dieses auf einem Druck von 5916,75hPa in einer Wassertiefe von 50,0m und anschließend wieder unter Normaldruck von 1013,25hPa gebracht wurde, maximal einen Dichteunterschied aufweist von ±5%, insbesondere von ±3%, bevorzugt von ±1,5%.

Dadurch wird ein Unterseekabel bereitgestellt, welches bei Einbringen in eine definierte Wassertiefe von 50,0m auf einen definierten Druck und anschließendes Verbringen unter Normaldruck nur einem sehr geringen Dichteunterschied aufweist, welcher deutlich unter dem Dichteunterschied von nach dem Stand der Technik gefertigten Unterwasserseekabeln liegt, wenn diese nach einer Fertigung in eine Wassertiefe von 50,0m gebracht werden.

Somit kann ein Unterseekabel bereitgestellt werden, dessen Auftriebsverhalten durch die Kompression bei einer bestimmten Wassertiefe nur geringfügig verändert wird. Dadurch kann dieses Unterseekabel insbesondere als Schleppkabel für eine Schleppantenne, insbesondere zur Richtungs- und Identifikationsbestimmung einer unbekannten Geräuschquelle unter Wasser, verwendet werden.

Das "Unterseekabel" entspricht insbesondere dem oben beschriebenen Unterwasserkabel.

Die "Umhüllung" entspricht insbesondere dem oben beschriebenen Außenmantel.

Der "Kern" entspricht insbesondere dem oben beschriebenen Kabelkern.

Um die weiteren Parameter des Unterseekabels festzulegen, weist das Unterseekabel einen definierten Durchmesser, insbesondere von 50mm±1mm, auf.

Somit kann ein Unterseekabel mit einer sehr geringen Dichteänderung beim Einsatz unter Wasser gleichzeitig mit einem Durchmesser mit einer sehr geringen Fertigungsbreite bereitgestellt werden.

Dies ist eine deutliche Verbesserung gegenüber bekannten Unterseekabeln, da diese aufgrund der Kompression im Wasser und der Dichteveränderung eine starke Variation des Durchmessers des Unterseekabels aufweisen.

In einer weiteren Ausführungsform des Unterseekabels ist ein definiertes Auftriebsverhalten des Unterseekabels mittels der Umhüllung des Kabelkerns eingestellt.

Durch die Einstellung des Auftriebsverhaltens über die Umhüllung wird sichergestellt, dass das Unterseekabel im Wasser gradlinig und in einer Ebene sowie einer definierten Wassertiefe ausgerichtet werden kann.

In einem weiteren Aspekt der Erfindung wird die Aufgabe gelöst durch ein Schlepp-Sonar für ein Wasserfahrzeug, welches ein zuvor beschriebenes Schleppkabel aufweist.

Eine "Schlepp-Sonar" ist ein Gerät zum Empfang von Schallimpulsen und zur Ortung von Gegenständen im Raum und unter Wasser. Bei einem Schleppsonar handelt es sich insbesondere um ein passives Sonarsystem. Ein Schlepp-Sonar ist insbesondere ein mehrere hundert Meter langes Kabel, an welches Hydrophone und/oder eine Schleppantenne angebracht sind. Bei Bedarf wird das Schleppsonar am Bord eines Wasserfahrzeuges ausgerollt und nachgeschleppt.

Insbesondere für ein Schleppsonar ist es notwendig, dass das Unterwasserkabel und/oder Unterseekabel, welches als Schleppkabel verwendet wird, ein definiertes Auftriebsverhalten hat und gradlinig und in einer Ebene geschleppt werden kann.

Dadurch wird sichergestellt, dass die Schleppantenne nicht ins Schwingen gerät und somit die Funktion des Schlepp-Sonars beeinflusst.

In einem weiteren Aspekt der Erfindung wird die Aufgabe gelöst durch ein Wasserfahrzeug, mit einem zuvor beschriebenen Schlepp-Sonar.

Somit kann das Fahrzeug und das Schlepp-Sonar ohne weitgehende Beschränkung des Fahrverhaltens des Fahrzeuges und ohne aufwendige Einstellung der Schleppebene und -tiefe des Schlepp-Sonars betrieben werden.

Auch ist keine weitere Einstellung des Auftriebsverhaltens des Schlepp-Sonars durch nachträgliche Trimmung des Schleppkabels notwendig. Folglich kann die Navigation, Kommunikation und Ortung des Fahrzeuges verbessert werden.

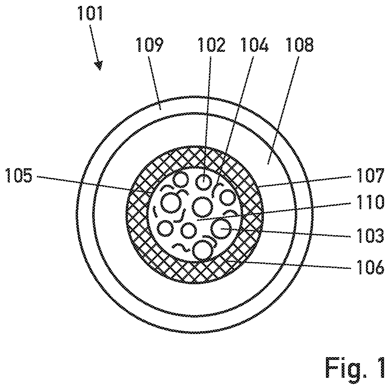

Im Weiteren wird die Erfindung anhand eines Ausführungsbeispiels näher erläutert. Es zeigt
- Figur 1: einen stark schematischen Querschnitt durch ein Unterwasserkabel, welches nach dem beschriebenen Verfahren gefertigt wurde.

Das Unterwasserkabel 101 wurde nach folgenden Verfahren gefertigt. Kupferdrähte werden in einer Drahtziehmaschine schrittweise gezogen, bis die Kupferdrähte einen Durchmesser von 0,50mm aufweisen. Da trotz Schmierkühlung während des Ziehens die Kupferdrähte stark beansprucht wurden, werden diese anschließend bei einer Spannung von 15V bei 400°C für 20ms geglüht. Dadurch erhalten die Kupferdrähte die erforderliche Flexibilität. Anschließend werden in einer Überdruckkammer unter einem Druck von 6000,00hPa unter gleichzeitiger Begasung mit Helium jeweils drei Kupferdrähte miteinander verdrillt. In der Überdruckkammer werden nachfolgend die verdrillten Drähte durch eine zähe Polypropylenmasse zur Aufbringung der Isolierschicht gezogen und nach Abkühlung aufgerollt.

Die Herstellung der Glasfasern erfolgt in zwei Schritten. Zuerst wird eine Vorform mittels chemischer Gasphasenabscheidung (chemical vapor deposition, CVD) erzeugt, wobei sich hochreines dotiertes Siliziumdioxid aus der Gasphase an der Außenseite eines massiven Rundstabs aus Aluminiumoxid abscheidet. Unter Rotation des Stabes werden die einzelnen Schichten zur Einstellung des Brechungsindex aufgetragen. Anschließend wird der Rundstab entfernt und der entstandene Hohlstab wird durch weiteres Erhitzen zur Vorform geschrumpft. Dadurch entstehen Glasstäbe von 1,0m Länge und 25,0mm Durchmesser.

Anschließend werden die Glasstäbe in einer Faserziehvorrichtung auf 2000°C erhitzt und zu Fasern mit einem Durchmesser von 50,0µm gezogen. In der Überdruckkammer unter einem Druck von 6000,00hPa wird anschließend die blanke Glasfaser mit einer zweistufigen Beschichtung aus Polyimid und Acryl beschichtet. Hierbei wird die Glasfaser durch einen Extruder geführt und anschließend der Kunststoff durch UV-Bestrahlung ausgehärtet. Danach wird die Glasfaser aufgerollt.

Die vorgefertigten aufgerollten Kupferleiter und die Glasfaserleiter werden schrittweise abgerollt und zusammen mit Hanffasern in ein Aluminiumrohr mit 0,1mm Wandstärke in der Überdruckkammer gezogen. Zum Schutz und zur Flexibilität werden anschließend ein Stahlgeflecht und eine Kevlar-Schicht aufgebracht. Nachfolgend wird weiterhin unter Heliumbegasung und Überdruck das vorgefertigte Kabel zur Aufbringung der ersten Mantelschicht durch weiche LDPE-Masse und anschließend zur Aufbringung der zweiten, äußeren Mantelschicht durch weiche PUR-Masse gezogen.

Durch die Heliumbegasung ist das gesamte Unterwasserkabel 101 luftblasenfrei gefertigt. Zur Ausgasung des Heliums wird anschließend das Unterwasserkabel auf Umgebungsdruck gebracht, wobei Helium schnell ausgast. Bis zum Einsatz wird das Unterwasserkabel auf einer Trommel aufgerollt gelagert.

Das gefertigte Unterwasserkabel 101 weist im Kabelkern 110 Glasfasern 102, Kupferadern 103 und Hanffasern 104 auf. Außenrum ist ein Aluminiumring 105 angeordnet. Anschließend folgt ein Stahlgeflecht 106, welches von einer Schicht aus Kevlar 107 umgeben ist. Danach folgt innen ein LDPE-Mantel (Low-density-Polyethylen) 108 und eine äußerer PUR-Mantel (Polyurethan) 109.

Die Glasfasern 102 dienen der Datenleitung und die Kupferadern 103 und der Aluminiumring 105 als Leiter zur elektrischen Energieversorgung. Der freie Raum um diese Leiter ist mit Hanffasern 104 ausgefüllt. Das Stahlgeflecht 106 und die Kevlar-Schicht 107 dienen zur Flexibilität und Stabilisierung. Der LDPE-Mantel 108 und der PUR-Mantel 109 wirken isolierend und bieten Schutz gegen äußere Belastungen und dem Eindringen von Meerwasser.

Aufgrund des Fertigungsverfahrens unter Überdruck mit gleichzeitiger Heliumbegasung ist der Kabelkern 110 des Unterwasserkabels 101 umgebungsluftblasenfrei. Dadurch ist bei der Fertigung eine definierte Dichte des Kabelkerns des Unterwasserkabels 101 eingestellt worden.

Der LDPE-Mantel 108 weist eine deutlich geringere Dichte als Meerwasser auf, sodass über den LDPE-Mantel 108 der Auftrieb bei der Fertigung eingestellt wurde. Dieses erfolgt in Verbindung mit dem PUR-Mantel 109, welcher eine höhere Dichte als der LDPE-Mantel 108 aufweist. Über die Dicke des LDPE-Mantels 108 und des PUR-Mantels 109 wird der Gesamtdurchmesser des Unterwasserkabels 101 von 50,0mm eingestellt, während die Dichte des Unterwasserkabels derart eingestellt ist, dass es sich auftriebsneutral im Meerwasser verhält.

Bei Eindringen dieses Unterwasserkabels 101 in eine Wassertiefe von 50,0m und anschließendes Verbringen unter Normaldruck beträgt der Dichteunterschied nur 3%.

### Bezugszeichenliste

101 Unterwasserkabel
102 Glasfaser
103 Kupferadern
104 Hanffaser
105 Aluminiumring
106 Stahlgeflecht
107 Kevlar
108 LDPE-Mantel
109 PUR-Mantel
110 Kabelkern

## Patentansprüche

1. Verfahren zur Fertigung eines Unterwasserkabels (101), insbesondere eines Schleppkabels für eine Schleppantenne eines Wasserfahrzeuges, wobei das Unterwasserkabel einen Kabelkern (110) und einen Außenmantel aufweist, wobei mindestens der Kabelkern unter einem Druck, welcher vom Umgebungsdruck der Luft abweicht, gefertigt wird, sodass der Kabelkern luftblasenarm hergestellt wird und das gefertigte Unterwasserkabel, nachdem dieses auf einem Druck von 5916,75hPa in einer Wassertiefe von 50,0m und anschließend wieder unter Normaldruck von 1013,25hPa gebracht wurde, durch eine Kompression unter Wasser maximal eine Dichteänderung von ±5,0%, insbesondere ±3,0% oder ±1,5%, aufweist, **dadurch gekennzeichnet, dass** ein Auftrieb des Unterwasserkabels über eine Dichte einer ersten Mantelschicht (108) des Außenmantels eingestellt wird, wobei die erste Mantelschicht um den gefertigten Kabelkern angeordnet wird und eine geringere Dichte als das Wasser aufweist.

2. Verfahren gemäß Anspruch 1, **dadurch gekennzeichnet, dass** der Kabelkern unter einem Unterdruck und/oder einem Überdruck gegenüber dem Umgebungsdruck gefertigt wird.

3. Verfahren gemäß Anspruch 2, **dadurch gekennzeichnet, dass** die Fertigung unter Überdruck dadurch erfolgt, dass die Fertigung in einer Überdruckkammer erfolgt.

4. Verfahren nach einem der vorherigen Ansprüche, **dadurch gekennzeichnet, dass** der Kabelkern unter Verwendung eines flüchtigen Schutzgases gefertigt wird, wobei der Kabelkern mit dem flüchtigen Schutzgas begast und gleichzeitig und/oder anschließend unter einem vom Umgebungsdruck abweichenden Druck gefertigt wird, wobei das flüchtige Schutzgas zumindest teilweise aus dem Kabelkern ausgast.

5. Verfahren nach einem der vorherigen Ansprüche, **dadurch gekennzeichnet, dass** eine Dichte des Unterwasserkabels durch die erste Mantelschicht (108) und eine zweite Mantelschicht (109) des Außenmantels eingestellt wird, wobei die erste Mantelschicht und die zweite Mantelschicht derart zusammengesetzt werden, dass ein Durchmesser des Unterwasserkabels festgelegt wird.

6. Verfahren nach Anspruch 4 oder 5, **dadurch gekennzeichnet, dass** die erste Mantelschicht und/oder die zweite Mantelschicht unter einem Unterdruck und/oder einem Überdruck gegenüber dem Umgebungsdruck gefertigt und/oder um den Kabelkern angeordnet wird oder werden.

7. Schleppkabel für eine Schleppantenne, wobei das Schleppkabel einen Kern und eine Umhüllung des Kerns aufweist, wobei der Kern zur Kommunikation oder Spannungsversorgung Glasfaser oder Kupferadern oder Aluminium und/oder zum Schutz Textilfaser oder Metallgeflecht oder Aramide oder Polycarbonat oder Polyethylen oder Polyurethan aufweist, wobei das gefertigte Schleppkabel, nachdem dieses auf einem Druck von 5916,75hPa in einer Wassertiefe von 50,0m und anschließend wieder unter Normaldruck von 1013,25hPa gebracht wurde, maximal einen Dichteunterschied aufweist von ±5%, insbesondere von ±3%, bevorzugt von ±1,5% **dadurch gekennzeichnet, dass** ein Auftrieb des Unterwasserkabels über eine Dichte einer ersten Mantelschicht (108) des Außenmantels eingestellt wird, wobei die erste Mantelschicht um den gefertigten Kabelkern angeordnet wird und eine geringere Dichte als das Wasser aufweist.

8. Schleppkabel nach Anspruch 7, **dadurch gekennzeichnet, dass** das Schleppkabel einen definierten Durchmesser aufweist.

9. Schlepp-Sonar für ein Wasserfahrzeug, **gekennzeichnet durch** ein Schleppkabel nach einem der Ansprüche 7 bis 8.

10. Wasserfahrzeug, **gekennzeichnet durch** ein Schlepp-Sonar nach Anspruch 9.

## Claims

1. Method for fabricating an underwater cable (101), more particularly a towing cable for a towed antenna of a watercraft, where the underwater cable comprises a cable core (110) and an outer sheath, where at least the cable core is fabricated under a pressure different from the ambient pressure of the air, so that the cable core is produced with low air bubble content and the fabricated underwater cable, after having been brought to a pressure of 5916.75 hPa at a water depth of 50.0 m and subsequently back under standard pressure of 1013.25 hPa, exhibits a maximum density change due to under-water compression of ±5.0%, more particularly ±3.0% or ±1.5%, **characterized in that** a buoyancy of the underwater cable is established via a density of a first sheath layer (108) of the outer sheath, where the first sheath layer is arranged around the fabricated cable core and has a lower density than the water.

2. Method according to Claim 1, **characterized in that** the cable core is fabricated under an underpressure and/or an overpressure relative to the ambient pressure.

3. Method according to Claim 2, **characterized in that** the fabrication under overpressure is accomplished by the fabrication taking place in an overpressure chamber.

4. Method according to any of the preceding claims, **characterized in that** the cable core is fabricated using a volatile protective gas, where the cable core is gassed with the volatile protective gas and at the same time and/or subsequently is fabricated under a pressure different from the ambient pressure, where the volatile protective gas at least partly outgasses from the cable core.

5. Method according to any of the preceding claims, **characterized in that** a density of the underwater cable is established through the first sheath layer (108) and a second sheath layer (109) of the outer sheath, where the make-up of the first sheath layer and the second sheath layer is such that a diameter of the underwater cable is specified.

6. Method according to Claim 4 or 5, **characterized in that** the first sheath layer and/or the second sheath layer are or is fabricated under an underpressure and/or an overpressure relative to the ambient pressure and/or are or is arranged around the cable core.

7. Towing cable for a towed antenna, where the towing cable comprises a core and a core jacketing, where the core for communication or voltage supply comprises glass fibres or copper wires or aluminium and/or for protection comprises textile fibres or metal braiding or aramids or polycarbonate or polyethylene or polyurethane, where the fabricated towing cable, after having been brought to a pressure of 5916.75 hPa at a water depth of 50.0 m and subsequently back under standard pressure of 1013.25 hPa, exhibits a maximum density difference of ±5%, more particularly of ±3%, preferably of ±1.5%, **characterized in that** a buoyancy of the underwater cable is established via a density of a first sheath layer (108) of the outer sheath, where the first sheath layer is arranged around the fabricated cable core and has a lower density than the water.

8. Towing cable according to Claim 7, **characterized in that** the towing cable has a defined diameter.

9. Towed sonar for a watercraft, **characterized by** a towing cable according to any of Claims 7 to 8.

10. Watercraft **characterized by** a towed sonar according to Claim 9.

## Revendications

1. Procédé de fabrication d'un câble sous-marin (101), notamment d'un câble de remorquage d'une antenne remorquée d'un engin nautique, le câble sous-marin comportant une âme de câble (110) et une gaine extérieure, au moins l'âme de câble étant fabriquée sous une pression qui est différente de la pression de l'air ambiant, de sorte que l'âme de câble est réalisée avec peu de bulles d'air et le câble sous-marin fabriqué après avoir été soumis à une pression de 5916,75 hPa à une profondeur d'eau de 50,0 m puis à nouveau à une pression normale de 1013,25 hPa, présente par une compression sous l'eau au maximum une variation de densité de ±5,0 %, en particulier de ±3,0 % ou ±1,5 %, **caractérisé en ce qu'**une flottabilité du câble sous-marin est réglée par le biais d'une densité d'une première couche (108) de la gaine extérieure, la première couche de gaine étant disposée autour de l'âme de câble fabriquée et ayant une densité inférieure à celle de l'eau.

2. Procédé selon la revendication 1, **caractérisé en ce que** l'âme de câble est fabriquée sous dépression et/ou surpression par rapport à la pression ambiante.

3. Procédé selon la revendication 2, **caractérisé en ce que** la fabrication est effectuée sous surpression du fait que la production est effectuée dans une chambre de surpression.

4. Procédé selon l'une des revendications précédentes, **caractérisé en ce que** l'âme de câble est fabriquée à l'aide d'un gaz protecteur volatil, l'âme de câble étant soumise au gaz protecteur volatil et fabriquée simultanément et/ou ultérieurement sous une pression qui est différente de la pression ambiante, le gaz protecteur volatil étant au moins partiellement dégazé de l'âme de câble.

5. Procédé selon l'une des revendications précédentes, **caractérisé en ce qu'**une densité du câble sous-marin est réglée par la première couche (108) et une deuxième couche (109) de la gaine extérieure, la première couche de gaine et la deuxième couche de gaine étant assemblées de façon à définir un diamètre du câble sous-marin.

6. Procédé selon la revendication 4 ou 5, **caractérisé en ce que** la première couche de gaine et/ou la deuxième couche de gaine sont fabriquées sous dépression et/ou surpression par rapport à la pression ambiante et/ou sont disposées autour de l'âme de câble.

7. Câble de remorquage destiné à une antenne remorquée, le câble de remorquage comportant une âme et une gaine de l'âme, l'âme comportant des fibres de verre ou des fils de cuivre ou d'aluminium pour la communication ou l'alimentation électrique et/ou des fibres textiles ou des treillis métalliques ou des aramides ou du polycarbonate ou du polyéthylène ou du polyuréthane pour la protection, le câble de remorquage fabriqué présentant au maximum une différence de densité de ±5 %, en particulier de ±3 %, de préférence ±1,5 %, après avoir été porté à une pression de 5916,75 hPa à une profondeur d'eau de 50,0 m, puis à nouveau à une pression normale de 1013,25 hPa, **caractérisé en ce qu'**une flottabilité du câble sous-marin est réglée par le biais d'une densité d'une première couche (108) de la gaine extérieure, la première couche de gaine étant disposée autour de l'âme de câble fabriquée et ayant une densité inférieure à celle de l'eau.

8. Câble de remorquage selon la revendication 7, **caractérisé en ce que** le câble de remorquage a un diamètre défini.

9. Sonar remorqué destiné à un engin nautique, **caractérisé par** un câble de remorquage selon l'une des revendications 7 à 8.

10. Engin nautique, **caractérisé par** un sonar remorqué selon la revendication 9.
